Europäisches Patentamt

European Patent Office

Office européen des brevets

(11) Veröffentlichungsnummer: **0 298 333 B1**

(12) **EUROPÄISCHE PATENTSCHRIFT**

(45) Veröffentlichungstag der Patentschrift: **18.03.92**

(21) Anmeldenummer: **88110224.8**

(22) Anmeldetag: **27.06.88**

(51) Int. Cl.⁵: **G01N 21/77**, G01N 21/78

(54) **Sensor für Gase oder Ionen.**

(30) Priorität: **07.07.87 DE 3722449**

(43) Veröffentlichungstag der Anmeldung:
**11.01.89 Patentblatt 89/02**

(45) Bekanntmachung des Hinweises auf die
Patenterteilung:
**18.03.92 Patentblatt 92/12**

(84) Benannte Vertragsstaaten:
**AT BE CH DE FR GB IT LI NL**

(56) Entgegenhaltungen:
**EP-A- 0 193 036          EP-A- 0 194 463**
**EP-A- 0 244 394          FR-A- 2 556 480**
**GB-A- 2 156 970          US-A- 4 100 422**
**US-A- 4 661 320**

**THIN SOLID FILMS, Band 126, Nr. 3/4, April
1985, Seiten 205-211, Elsevier Sequoia, Lausanne, CH; K. TIEFENTHALER et al.: "Grating
couplers as integrated optical humidity and
gas sensors"**

**S.M.Sze : Physics of Semiconductor Devices, New York, 1981.**

(73) Patentinhaber: **SIEMENS AKTIENGESELL-
SCHAFT**
**Wittelsbacherplatz 2**
**W-8000 München 2(DE)**

(72) Erfinder: **Stich-Baumeister, Eva-Maria, Dr.**
**Sieglitzhofer Strasse 51**
**W-8520 Erlangen(DE)**
Erfinder: **Winnacker, Albrecht, Prof. Dr.**
**Puchtastrasse 6**
**W-8520 Erlangen(DE)**
Erfinder: **Dohnke, Karl-Otto, Dr**
**An der Point 4**
**W-8550 Forchheim(DE)**

**Beschreibung**

Die Erfindung bezieht sich auf einen Sensor für Gase oder Ionen mit einer Lichtquelle, einem Detektor sowie einer Sensorschicht, der ein Träger zugeordnet ist. Die Sensorschicht, deren Absorptionsvermögen sich unter der Einwirkung des zu messenden Gases ändert, ist auf einem streifenförmigen Lichtwellenleiter angeordnet, der zur Lichtführung zwischen der Lichtquelle und dem Detektor dient.

Eine bekannte Ausführungsform eines Dünnschicht-Sensors zur Bestimmung des Kohlendioxid-Gehalts der Luft enthält eine dünne Sensorschicht, die auf einem Träger angeordnet ist. Die der Sensorschicht zugewandte Flachseite des Trägers ist mit einer Spiegelfläche versehen. Der Lichtstrahl einer von der Sensorschicht und dem Träger räumlich getrennten Strahlungsquelle tritt durch die Sensorschicht hindurch, wird an der Spiegelfläche des Trägers reflektiert und gelangt dann zu einem ebenfalls vom Sensor und Träger räumlich getrennten photoelektrischen Wandler, der beispielsweise eine Photozelle sein kann. Der Lichtstrahl tritt somit zweimal durch die gasempfindliche Sensorschicht, deren Absorptionsvermögen durch die Gaseinwirkung geändert wird. Die entsprechende Farbabweichung des Lichtstrahls wird von der Photozelle registriert (US-Patent 3 754 867).

In einer bekannten Ausführungsform eines Gassensors für Wasserstoff oder Wasserstoffverbindungen ist eine Lichtquelle, beispielsweise eine Lumineszenzdiode LED (light emitting diode), über einen als Dünnfilm gestalteten Lichtwellenleiter mit einem Detektor, beispielsweise einer Photodiode, verbunden. Der Lichtwellenleiter ist auf einem Substrat angeordnet und mit einer Oberflächenschicht aus einem katalytischen Metall, beispielsweise Palladium Pd oder Platin Pt, versehen, die der Gaseinwirkung ausgesetzt wird. Der Lichtwellenleiter dient als Sensor und besteht aus einem Metalloxid, beispielsweise Wolframoxid $WO_3$ oder Molybdän $MoO_3$. Unter Einwirkung von Protonen, welche die Metallschicht durchdringen, wird die Sensorschicht reduziert und ändert dadurch ihr Absorptionsvermögen (US-Patentschrift 4 661 320).

Der Erfindung liegt nun die Aufgabe zugrunde, diese bekannte Ausführungsform eines Sensors zu vereinfachen und zu verbessern, insbesondere sollen die verschiedenen Komponenten des Sensors mit Methoden der Halbleitertechnologie integriert werden.

Diese Aufgabe wird erfindungsgemäß gelöst mit den kennzeichnenden Merkmalen des Anspruchs 1. Mit einem Lichtwellenleiter aus einem III-V-Halbleiter ist es möglich, den gesamten Sensor als integriertes optoelektronisches Bauteil zu gestalten. Dies bedeutet eine wesentliche Vereinfachung, insbesondere auch eine wesentliche Verbesserung hinsichtlich der Ansprechzeit. In dieser Ausführungsform sind die Lichtquelle und der Photodetektor über den Lichtwellenleiter, der zur Strahlungsführung dient und mit der Sensorschicht abgedeckt ist, miteinander verbunden. Das in den Lichtwellenleiter eintretende Licht, das durch die Einwirkung von Ionen an der Oberfläche der Sensorschicht oder die Einwirkung von Gasen im Volumen der Sensorschicht verändert werden kann, wird vom Detektor registriert.

Um die Lichtverluste zu begrenzen, kann die von der Lichtquelle abgewandte Flachseite des Lichtwellenleiters im Bereich der Stirnfläche der Lichtquelle mit einer Verspiegelung versehen sein.

In der Ausführungsform als Gassensor kann vorzugsweise eine Sensorschicht mit reversibler Farbänderung aus einem Gemisch von mindestens einem basischen oder sauren Farbbildner oder Farbstoff und mindestens einer komplementären, sauren bzw. basischen Verbindung vorgesehen sein (DE-OS 35 06 676). Besonders vorteilhaft ist ein Farbbildner oder Farbstoff des Triphenylmethan-Systems, insbesondere Kristallviolettlacton. Als Farbstoff ist außerdem Phthalein oder Sulfonphthalein geeignet. Als saure Verbindung kann die Sensorschicht Bis-phenol-A oder auch Salicylsäure enthalten. Als basische Verbindung ist p-Toluoliden oder p-Chloranilin geeignet. Das Gemisch kann auch in einer Matrixsubstanz eingebettet sein, die beispielsweise aus Polyvinylchlorid PVC, Polyethylen oder Silicon bestehen kann.

In der Ausführungsform als ionensensitiver Sensor, beispielsweise als Sensor für einen pH-Wert, kann die Sensorschicht auch aus einem Indikator-Farbstoff bestehen.

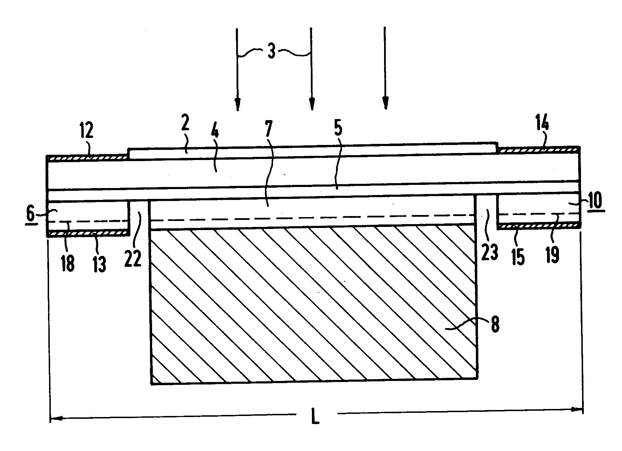

Zur weiteren Erläuterung der Erfindung wird auf die Zeichnung Bezug genommen, in der ein Ausführungsbeispiel eines Sensors gemäß der Erfindung schematisch veranschaulicht ist.

In der dargestellten integrierten Ausführungsform des Sensors für Gase oder Ionen ist eine dünne Sensorschicht 2, deren Dicke vorzugsweise wenigstens etwa 50 nm beträgt und 200 nm nicht wesentlich überschreitet, auf einem Lichtwellenleiter 4 mit einer Dicke von beispielsweise etwa 5 bis 200 $\mu$m angeordnet, der aus einem III-V-Halbleiter, beispielsweise Galliumarsenid GaAs, insbesondere Galliumphosphid GaP, besteht und an seiner unteren Flachseite mit einer Anpassungsschicht (graded layer) 5 versehen ist. Ein auf die Sensorschicht 2 einwirkendes Gas ist in der Figur durch Pfeile angedeutet und mit 3 bezeichnet. Zwischen dem Träger 8 und der Anpassungsschicht 5 ist eine Halbleiterschicht 7 angeordnet, die aus einer III-V-Halbleiterverbindung, insbesondere Gallium-

Arsenid-Phosphid $GaAs_{1-x}P_x$, bestehen kann. In diese Halbleiterschicht 7 werden die Lichtquelle 6 und der Detektor 10 integriert. Die Lichtquelle 6 besteht aus einer Lumineszenzdiode LED, deren Wellenlänge im Absorptionsbereich der Sensorschicht 2 liegt. In den n-leitenden Halbleiterkörper ist auf der unteren Flachseite bis zu einer Tiefe von beispielsweise etwa 3 $\mu$m ein p-leitender Dotierungsstoff, vorzugsweise Zink Zn oder auch Magnesium Mg, eindiffundiert. Der entstehende pn-Übergang 18 ist gestrichelt angedeutet. Die als Detektor dienende Photodiode 10 besteht ebenfalls aus einer III-V-Halbleiterverbindung, insbesondere Gallium-Arsenid-Phosphid $GaAs_{1-x}P_x$, in deren n-leitenden Halbleiterkörper an der unteren Flachseite durch Diffusion von p-leitendem Dotierungsstoff, insbesondere Zink Zn, ein pn-Übergang 19 hergestellt worden ist, der in der Figur gestrichelt angedeutet ist. Die Lumineszenzdiode 6 ist mit metallischen Elektroden 12 und 13 versehen, die beispielsweise aus Aluminium bestehen können, das auf die entsprechenden Halbleiterschichten aufgedampft oder aufgesputtert ist. In gleicher Weise ist die Photodiode 10 mit metallischen Elektroden 14 und 15 versehen, die ebenfalls aus aufgedampftem oder aufgesputtertem Aluminium bestehen können. Die Elektroden 12 bis 15 wirken zusätzlich als metallische Spiegel und verbessern damit die Ein-bzw. Auskopplung des Lichtes in den Wellenleiter.

Zur Intensitätserhöhung kann vorzugsweise die dem Träger 8 zugewandte Flachseite der Halbleiterschicht 7 mit einer in der Figur nicht dargestellten Verspiegelung versehen sein. Diese Verspiegelung kann beispielsweise aus Aluminium bestehen, das mit einer Schichtdicke von beispielsweise etwa 0,1 bis 0,5 $\mu$m auf die Halbleiterschicht 7 aufgebracht wird.

Die Anpassungsschicht 5 mit einer Dicke von beispielsweise etwa 10 bis 50 $\mu$m und die Lumineszenzdiode 6 sowie die Photodiode 10 können beispielsweise dadurch in einfacher Weise hergestellt werden, daß auf ein als Lichtwellenleiter 4 dienendes Substrat aus einer III-V-Halbleiterverbindung an einer seiner Flachseiten nacheinander die Anpassungsschicht 5 und die Halbleiterschicht 7 aufgebracht werden. Diese Halbleiterschicht 7 bedeckt zunächst die gesamte untere Flachseite der Anpassungsschicht 5. Anschließend erfolgt zweckmäßig die Dotierung der gesamten Fläche, so daß die beiden pn-Übergänge 18 und 19 in einem gemeinsamen Arbeitsgang hergestellt werden können. Durch Gräben 22 und 23 wird die Halbleiterschicht 7 dann von der Lumineszenzdiode 6 bzw. der Photodiode 10 getrennt.

Die dünne Sensorschicht 2 kann auf die obere Flachseite des Lichtwellenleiters 4 vorzugsweise aufgeschleudert oder auch aufgesputtert werden. Beispielsweise kann zunächst die gesamte obere Flachseite des Lichtwellenleiters 4 mit der Sensorschicht versehen werden und in den Bereichen der Elektroden 12 und 14 wird dieses Material anschließend durch Photolithographie wieder entfernt. Nachdem die Lumineszenzdiode 6 und die Photodiode 10 mit ihren metallischen Elektroden 12 und 13 bzw. 14 und 15 versehen sind, wird der so hergestellte Gassensor mit seiner Halbleiterschicht 7 auf dem Träger 8 befestigt, beispielsweise aufgeklebt.

In Verbindung mit einer gelbleuchtenden Lumineszenzdiode kann die Sensorschicht 2 vorzugsweise Kristallviolettlacton sowie Bisphenol A im Verhältnis von etwa 1:7,5 enthalten. In Verbindung mit einer rotleuchtenden Lumineszenzdiode 6 als Lichtquelle kann die Sensorschicht 2 vorzugsweise Malachitgrünlacton und Bisphenol A im Verhältnis 1:5 enthalten. In beiden Ausführungsformen kann sie vorzugsweise noch bis zu etwa 25 Gew.-% Polyvinylchlorid PVC enthalten. Das Material der Sensorschicht wird im allgemeinen als Lösung verarbeitet, die sich mit einer Lackschleuder auf den Lichtwellenleiter 4 in einer homogenen Schicht gleichmäßiger Dicke aufschleudern läßt. Der Träger 8 besteht aus einem lichtundurchlässigen, mechanisch stabilen Material. In der Ausführungsform eines Trägers 8 aus Kunststoff, beispielsweise Polymethylmethacrylat, das unter der Bezeichnung Plexiglas bekannt ist, kann die Stirnfläche des Trägers 8 vorzugsweise mit einer lichtundurchlässigen Auflage versehen sein.

Eine besonders kurze Ansprechzeit der Sensoranordnung erhält man durch eine entsprechend dünne Sensorschicht 2, deren Dicke deshalb vorzugsweise weniger als 100 nm beträgt.

**Patentansprüche**

1. Sensor für Gase oder Ionen mit einer Lichtquelle (6) und einem Detektor (10) sowie einer Sensorschicht (2), der ein Träger (8) zugeordnet ist und deren Absorptionsvermögen sich durch die Einwirkung des zu messenden Gases ändert und die auf der oberen Flachseite eines streifenförmigen Lichtwellenleiters (4) angeordnet ist, der zur Lichtführung zwischen der Lichtquelle und dem Detektor (10) dient, **dadurch gekennzeichnet,** daß der Lichtwellenleiter (4) aus einer III-V-Halbleiterverbindung besteht und daß als Lichtquelle eine Lumineszenzdiode (6) vorgesehen ist, die in den Lichtwellenleiter (4) integriert ist, und daß als Detektor (10) eine Photodiode vorgesehen ist, die ebenfalls in den Lichtwellenleiter (4) integriert ist, und daß die untere Flachseite des Lichtwellenleiters (4) den den p-n-Übergang enthaltenden Halbleiterkörper der Lumineszenzdiode, die Stirnfläche des Trägers (8) sowie den den p-n-Übergang enthaltenden Halbleiterkörper der Photodiode (10) abdeckt.

2. Sensor nach Anspruch 1, **dadurch gekennzeichnet,** daß zwischen dem Lichtwellenleiter (4) und dem Träger (8) eine Halbleiterschicht (7) vorgesehen ist und daß zwischen dieser Halbleiterschicht (7) und dem Lichtwellenleiter (4) eine Anpassungsschicht (5) vorgesehen ist.

3. Sensor nach Anspruch 2, **dadurch gekennzeichnet,** daß die Halbleiterschicht (7) von der Lumineszenzdiode (6) und der Photodiode (10) jeweils durch einen Graben (22 bzw. 23) getrennt ist.

4. Sensor nach Anspruch 1, **dadurch gekennzeichnet,** daß der Lichtwellenleiter (4) aus Galliumphosphid GaP besteht.

5. Sensor nach einem der Ansprüche 1 bis 4, **dadurch gekennzeichnet,** daß die Dicke der Sensorschicht (2) wenigstens etwa 50 nm beträgt und 200 nm nicht wesentlich überschreitet.

6. Sensor nach Anspruch 5, **dadurch gekennzeichnet,** daß die Dicke der Sensorschicht (2) höchstens 100 nm beträgt.

7. Sensor nach einem der Ansprüche 1 bis 6, **dadurch gekennzeichnet,** daß die Sensorschicht (2) wenigstens teilweise aus einem chemosensitiven Material besteht.

8. Sensor nach einem der Ansprüche 1 bis 7, **dadurch gekennzeichnet,** daß eine Sensorschicht (2) mit reversibler Farbänderung vorgesehen ist, die aus einem Gemisch von mindestens einem basischen oder sauren Farbbildner oder Farbstoff und mindestens einer komplementären sauren bzw. basischen Verbindung besteht.

9. Sensor nach Anspruch 8, **dadurch gekennzeichnet,** daß die Sensorschicht (2) einen Farbbildner oder Farbstoff des Triphenylmethan-Systems enthält.

10. Sensor nach Anspruch 9, **dadurch gekennzeichnet,** daß die Sensorschicht (2) als Farbbildner Malachitgrünlacton oder Kristallviolettlacton enthält.

11. Sensor nach Anspruch 9 oder 10, **dadurch gekennzeichnet,** daß die Sensorschicht (2) als Farbstoff Phthaleine oder Sulfonphthaleine enthält.

12. Sensor nach Anspruch 8, **dadurch gekennzeichnet,** daß die Sensorschicht (2) als saure Verbindung Bisphenol-A und/oder Salicylsäure enthält.

13. Sensor nach Anspruch 8, **dadurch gekennzeichnet,** daß die Sensorschicht (2) als basische Verbindung p-Toluidin oder p-Chloranilin enthält.

14. Sensor nach Anspruch 8, **dadurch gekennzeichnet,** daß das Gemisch in eine Matrixsubstanz eingebettet ist.

15. Verfahren zum Herstellen eines Sensors nach einem der Ansprüche 1 bis 14, **dadurch gekennzeichnet,** daß ein als Lichtwellenleiter (4) dienendes Substrat zunächst auf einer Flachseite mit einer Anpassungsschicht (5) und dann mit einer Halbleiterschicht (7) versehen wird, und daß anschließend diese Halbleiterschicht (7) durch Dotierung mit einem pn-Übergang (18, 19) versehen wird und dann diese Halbleiterschicht (7) durch zwei Gräben (22, 23) aufgeteilt wird und daß dann die gegenüberliegende Flachseite mit der Sensorschicht (2) versehen wird.

**Claims**

1. Sensor for gases or ions having a light source (6) and a detector (10) and also a sensor layer (2) with which there is associated a carrier (8) and the absorbing capacity of which layer is varied as a result of the action of the gas to be measured and which layer is arranged on the upper flat side of a strip-like light waveguide (4) which is used to conduct light between the light source and the detector (10), characterised in that the light waveguide (4) comprises a III-V semiconductor compound and in that a luminescent diode (6) is provided as the light source which is integrated into the light waveguide (4) and in that a photodiode is provided as the detector (10) which is likewise integrated into the light waveguide (4) and in that the lower flat side of the light waveguide (4) covers the semiconductor body of the luminescent diode containing the p-n junction, the face of the carrier (8) and also the semiconductor body of the photodiode (10) containing the p-n junction.

2. Sensor according to claim 1, characterised in that a semiconductor layer (7) is provided between the light waveguide (4) and the carrier (8) and in that a matching layer (5) is provided between this semiconductor layer (7) and the light waveguide (4).

3. Sensor according to claim 2, characterised in that the semiconductor layer (7) is separated from the luminescent diode (6) and the photodiode (10) in each case by means of a trough (22 and 23 respectively).

4. Sensor according to claim 1, characterised in that the light waveguide (4) comprises gallium phosphide GaP.

5. Sensor according to one of the claims 1 to 4, characterised in that the thickness of the sensor layer (2) amounts to at least approximately 50 nm and does not substantially exceed 200 nm.

6. Sensor according to claim 5, characterised in that the thickness of the sensor layer (2) amounts at most to 100 nm.

7. Sensor according to one of the claims 1 to 6, characterised in that the sensor layer (2) comprises at least in part a chemo-sensitive material.

8. Sensor according to one of the claims 1 to 7, characterised in that a sensor layer (2) with reversible colour change is provided, consisting of a mixture of at least one basic or acidic colour former or colouring substance and at least one complementary acidic or basic compound.

9. Sensor according to claim 8, characterised in that the sensor layer (2) contains a colour former or colouring substance of the triphenylmethane system.

10. Sensor according to claim 9, characterised in that the sensor layer (2) contains malachite green lactone or crystal violet lactone as a colour former.

11. Sensor according to claim 9 or 10, characterised in that the sensor layer (2) contains phthaleins or sulphone phthaleins as colouring substance.

12. Sensor according to claim 8, characterised in that the sensor layer (2) contains bisphenol-A and/or salicylic acid as an acidic compound.

13. Sensor according to claim 8, characterised in that the sensor layer (2) contains p-toluidine or p-chloroaniline as a basic compound.

14. Sensor according to claim 8, characterised in that the mixture is embedded in a matrix substance.

15. Method for producing a sensor according to one of the claims 1 to 14, characterised in that a substrate serving as a light waveguide (4) is first provided on one flat side with a matching layer (5) and then with a semiconductor layer (7) and in that subsequently this semiconductor layer (7) is provided with a p-n junction (18, 19) by means of doping, and then this semiconductor layer (7) is divided by means of two troughs (22, 23) and in that then the opposing flat side is provided with the sensor layer (2).

**Revendications**

1. Capteur pour des gaz ou pour des ions comprenant une source lumineuse (6) et un détecteur (10), ainsi qu'une couche formant capteur (2) qui est associée à un support (8) dont le pouvoir d'absorption se modifie sous l'action du gaz à mesurer et qui est disposé sur le côté plat supérieur d'un guide d'ondes lumineuses (4) en forme de bande qui sert à faire passer la lumière entre la source lumineuse et le détecteur (10), caractérisé en ce que le guide d'ondes lumineuses (4) est en un composé semiconducteur III-V, en ce qu'il est prévu comme source lumineuse une diode électroluminescente qui est intégrée au guide d'ondes lumineuses (4) et en ce qu'il est prévu comme détecteur (10) une photodiode qui est également intégrée au guide d'ondes lumineuses (4) et en ce que le côté plat inférieur du guide d'ondes lumineuses (4) recouvre le corps semiconducteur contenant la jonction pn de la diode électroluminescente, la surface frontale du support (8) ainsi que le corps semiconducteur (10) contenant la jonction pn.

2. Capteur suivant la revendication 1, caractérisé en ce qu'entre le guide d'ondes lumineuses (4) et le support (8) est prévue une couche semiconductrice (7) et en ce que, entre cette couche semiconductrice (7) et le guide d'ondes lumineuses (4) est prévue une couche d'adaptation (5).

3. Capteur suivant la revendication 2, caractérisé en ce que la couche semiconductrice (7) est séparée de la diode électroluminescente (6) et de la photodiode (10) respectivement par un sillon (22 et 23).

4. Capteur suivant la revendication 1, caractérisé en ce que le guide d'ondes lumineuses (4) est en phosphure de gallium GaP.

5. Capteur suivant l'une des revendications 1 à 4, caractérisé en ce que l'épaisseur de la couche formant capteur (2) est d'au moins 50 nm environ et ne dépasse pas sensiblement 200 nm.

6. Capteur suivant la revendication 5, caractérisé en ce que l'épaisseur de la couche formant capteur (2) est au plus de 100 nm.

7. Capteur suivant l'une des revendications 1 à 6, caractérisé en ce que la couche formant capteur (2) est au moins en partie en un matériau chémiosensible.

8. Capteur suivant l'une des revendications 1 à 7, caractérisé en ce qu'il est prévu une couche formant capteur (2) à variation de coloration réversible, qui est constituée d'un mélange d'au moins un agent de formation d'une couleur ou d'un colorant basique ou acide et d'au moins un composé complémentaire acide ou basique.

9. Capteur suivant la revendication 8, caractérisé en ce que la couche formant capteur (2) contient un agent de formation d'une couleur ou un colorant du système du triphénylméthane.

10. Capteur suivant la revendication 9, caractérisé en ce que la couche formant capteur (2) contient, comme agent de formation d'une couleur, une lactone au verre de malachite ou une lactone au violet de cristal.

11. Capteur suivant la revendication 9 ou 10, caractérisé en ce que la couche formant capteur (2) contient, comme colorant, des phtaléines ou des sulfonophtaléines.

12. Capteur suivant la revendication 8, caractérisé en ce que la couche (2) formant capteur contient, comme composé acide, du bisphénol-A et/ou de l'acide salicylique.

13. Capteur suivant la revendication 8, caractérisé en ce que la couche formant capteur (2) contient, comme composé basique, de la p-toluidine ou de la p-chloraniline.

14. Capteur suivant la revendication 8, caractérisé en ce que le mélange est noyé dans une substance formant matrice.

15. Procédé de fabrication d'un capteur suivant l'une des revendications 1 à 14, caractérisé en ce qu'il consiste à munir un substrat servant de guides d'ondes lumineuses (4) d'abord sur un côté plat d'une couche d'adaptation (5) et ensuite, d'une couche semiconductrice (7) et ensuite à munir cette couche semiconductrice (7) par dopage d'une jonction pn (18,19) et ensuite, à subdiviser cette couche semiconductrice (7) par deux sillons (22,23) et à munir ensuite le côté plat opposé de la couche formant capteur (2).